# EUROPEAN PATENT APPLICATION

(11) **EP 0 946 021 A1**
(43) Date of publication of application: **29.09.1999**
(21) Application number: 98302019.9
(22) Date of filing: 18.03.1998
(51) Int. Cl.: H04L 12/56, H04Q 11/04

(54) **Method to determine the active or idle state of a connection**

(71) Applicant: SIEMENS AKTIENGESELLSCHAFT, 81541 München (DE)
(72) Inventor: Davis, Simon, Romsey, Hampshire, SO51 7LX (GB); Heiss, Herbert, 82008 Unterhading (DE)
(74) Representative: Mackett, Margaret Dawn

(57) **Abstract**

Described herein is a method of performing idle detection for a connection in a network. The connection is monitored for the arrival of data and the arrival rate is compared with a predetermined value. If the arrival rate is less than the predetermined value, the connection is considered to be idle. If the connection is active and an idle detection timer expires, the status of the connection is checked to see if it is 'ACTIVE' or 'IDLE'. If the connection is 'ACTIVE', a counter is decremented and checked to see if it has been decremented to zero. If it has, the counter is reset to its maximum value and the status of the connection is 'IDLE'. This state is stored and the idle detection cycle ends.

## Description

The present invention relates to improvements in or relating to networks, and is more particularly, although not exclusively, concerned with determining the status of a connection in a broadband network.

It is well known that different services may be transmitted between various points in the network using asynchronous transfer mode (ATM). Such services may include voice transmission services, video transmission services and data transmission services, each service having its own transfer rate, bandwidth and delay. Generally, a network in its simplest form can be considered to comprise two end points, a source and a destination, which define a path. At least one node or switching system is located along the path for directing the service from its source to its destination. The nodes divide the path into a plurality of segments. More than one service can be transmitted along at least part of the path at any one time thereby sharing segments.

ATM networks are generally broadband and have a high bit rate. One type of service allows the sharing of bandwidth available bit rate (ABR) between connection. ABR is an measurement of the amount of bandwidth available to each connection for transmission, and needs to be determined for the entire network before the data is sent to ensure that the amount of data being sent can be accommodated at every stage, that is, in every segment, between its source and its destination. The data can be considered to be sent as a plurality of packages, each package comprising a predetermined number of cells.

It is useful to determine if a connection is 'IDLE' or 'ACTIVE' when carrying out explicit rate feedback calculation in an ABR system. A connection is defined to be 'IDLE' if the measured cell arrival rate is less than a predetermined value for that connection. If the connection is not 'IDLE', it is considered to be 'ACTIVE'.

However, when determining whether a connection is 'IDLE', measurements may be lost due to buffer overflow, for example, and the incorrect status is attributed to a particular connection.

It is therefore an object of the present invention to provide a method of determining the status of a connection in a network which overcomes the problems mentioned above.

In accordance with one aspect of the present invention, there is provided a method for determining the status of a connection in a network comprising a plurality connections, the method comprising:- assigning a predetermined time period to the connection; and measuring the bandwidth of the connection during the predetermined time period; characterised in that the method further comprises:- inputting the measured bandwidth to an update function; checking the value of the measured bandwidth against a predetermined value stored in the update function for the connection to determine the status thereof and adjusting the status accordingly; resetting the predetermined time period for the connection; and when the predetermined time period expires, setting the status of the connection to 'IDLE'.

For a better understanding of the present invention, reference will now be made, by way of example only, to the accompanying drawings in which:-
Figure 1 is a block diagram illustrating a simple network;
Figure 2 is a block diagram illustrating the functions in a switch system in the network of Figure 1;
Figure 3 is a block diagram illustrating an available package of data which can be sent on the network;
Figure 4 is a flow chart illustrating connection status update in accordance with the present invention; and
Figure 5 is a flow chart illustrating idle detection in accordance with the present invention.

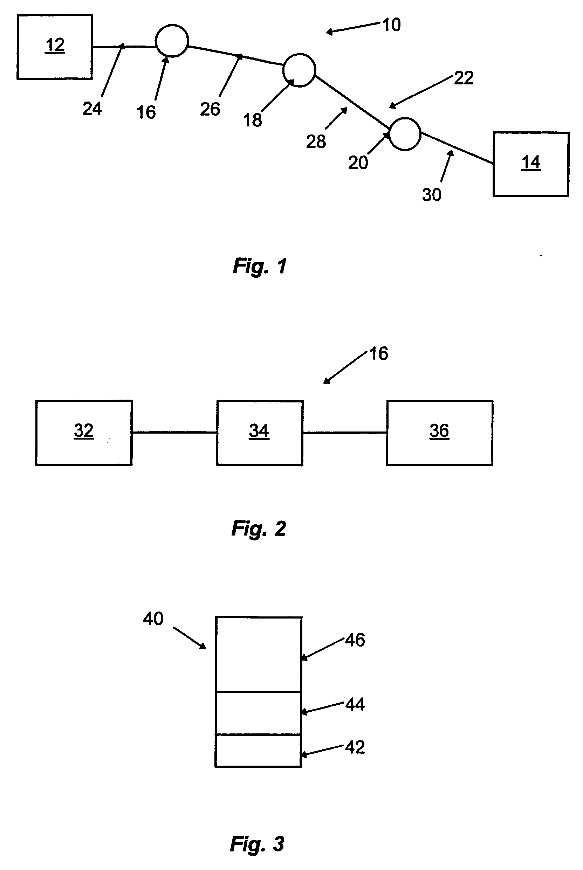

In Figure 1, a simple network 10 is illustrated which comprises end points 12, 14 and three switch systems 16, 18, 20 located in path 22 extending between the two end points 12, 14. Path 22 comprises portions 24, 26, 28 and 30 between respective ones of end point 12, switch 16, switch 18, switch 20 and end point 14 as shown. End points 12, 14 comprise a source and a destination respectively.

Figure 2 illustrates the component parts of one of the switch system 16, 18, 20. Switch system 16 comprises a buffer 32 for receiving packages of data and calculating the rate of each connection before passing it onto a connection administration unit 34. The connection administration unit 34 determines the 'ACTIVE' or 'IDLE' status of a connection. A fair share device 36 is connected to the connection administration unit 34 for determining how to allocate resources on the path 22. One such device is described in copending German patent application no. 19730760.4 entitled "Verfahren zum Optimieren der Auslastung auf Verbindungsabschnitten bei ABR Verkehr". In the situation where more than one ABR connection is to be handled by a switch system, the allocation of resources needs to be divided fairly. In particular, for each connection, there is a minimum cell rate (MCR) which can be transmitted through the network, and where there are two or more simultaneous connections, the MCR for each connection is allocated in the available bandwidth 40 and the remaining bandwidth is divided between the connections. This is shown schematically in Figure 3.

In Figure 3, the available bandwidth 40 has a capacity of, say, 150Mbits per second. If two connections 42, 44 are to be switched onto the same segment, each connection is allocated bandwidth in accordance with its MCR. In this case, connections 42, 44 have respective MCR values of MCR₁ and MCR₂, MCR₂ being greater than MCR₁ but together are less than 150Mbits. The remaining bandwidth 46 of the available bandwidth 40 is allocated to connections 42, 44 on a proportional basis, that is, in the ratio of MCR₁ to MCR₂.

In accordance with the method of the present invention, it is assumed that all ATM cells arrive on a link. At cell arrival, the arrival rate of cell for each ABR connection is measured. This can be measured in one of two ways, namely, by counting the number of cells per unit time or by measuring the time for a predetermined number of cells. It is to be noted, however, that the exact measurement method is not material to the operation of the present invention. Ideally, the measurement of the arrival rate is carried out at least every N_cells cells arriving for the connection. (N_cells is a connection independent constant and corresponds to the maximum number of cells of the connection between two rate measurements for the same connection.) The measured rate is sent to the connection status administration unit 34 of each switch system 16, 18, 20 via buffer 32.

For implementation of the method of the present invention, the following parameters are required:-
a) For each ABR connection, the status is either active or idle. For a new connection, the status is idle.
b) T_idle is a connection independent constant which represents a predetermined time period.
c) idle_loop is a connection specific counter. It is set to Max_idle_loop for a new ABR connection.
d) Max_idle_loop is a connection specific integer.

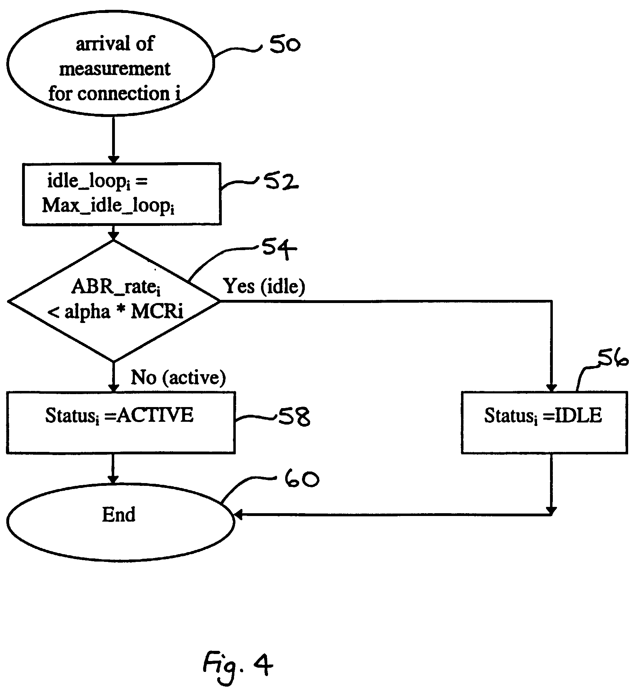

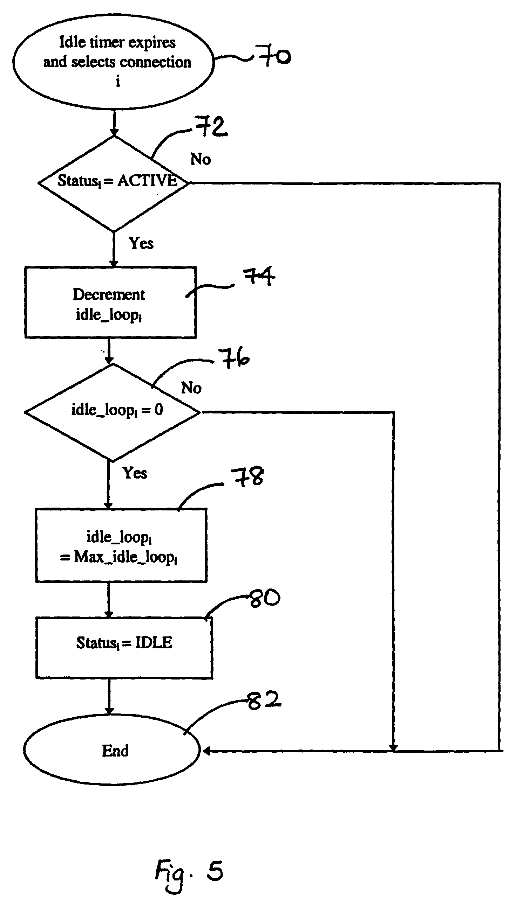

The method of the present invention will now be described in detail with reference to Figures 4 and 5 of the drawings. The method operates on a MCRi per connection which is always larger than zero. It also maintains the status of a connection. An ABR connection is idle if the last measured rate, ABR_rate_i, of the connection is less than α*MCRi (α is a constant which has a value between 0 and 1) or if it is considered to be idle in accordance with the invention. Otherwise the connection is active.

On arrival of a measurement for connection i at the connection status administration unit, the connection status is updated as illustrated in Figure 4. Having carried out the measurement for the arrival rate of cell for connection i (step 50), the idle_loop counter for i is set to Max_idle_loopᵢ (step 52) The measured ABR_rateᵢ is then compared with a stored value of α*MCRi (step 54). If the measured ABR_rateᵢ is less α*MCRi, the status of the connection i is set to 'IDLE' (step 56) and stored and the cycle ends (step 60). If the measured ABR_rateᵢ is greater than α*MCRi, the status of the connection i is set to 'ACTIVE' (step 58) and stored and the cycle ends (step 60).

The ABR connections for the network may be put into different groups, each group having an idle detection timer which expires every time period T_idle. When the timer expires for each group, idle detection is carried out for all connections in that group. By having the timer for different groups expiring at different times, idle detection for all ABR connections can be carried out over the whole interval T_idle, thereby spreading the workload.

Figure 5 illustrates the flow chart for idle detection when an idle detection timer expires. It will be appreciated that only when the connection i is active, idle detection is carried out. When the idle detection timer expires and connection i is selected (step 70), the status of connection i is checked to see if it is 'ACTIVE' or 'IDLE' (step 72). If the connection i is 'ACTIVE' idle_loop is decremented (step 74). The value of idle_loopᵢ is then checked to see if it has been decremented to zero (step 76). If it has, the idle_loopᵢ value is reset to the Max_idle_loopᵢ value (step 78) and the status of the connection i is 'IDLE' (STEP 80). This value is stored and the idle detection cycle ends (step 82). If the value of idle_loopᵢ has not been decremented to zero, the idle detection cycle ends (step 82). If the connection i is found not to be 'ACTIVE' (step 72), the idle detection cycle ends (step 82).

In accordance with the method of the present invention, measurement message loss will not cause a problem as the status of the connection is not maintained as 'ACTIVE' even though cells have stopped being sent and not been received. This may happen if the connection stops sending cells for a longer time and the last measurement is lost. In that case, idle detection will set the connection to 'IDLE' after about the time given by Max_idle_loopᵢ*T_idle.

Late measurement is also not a problem as the idle state is detected early in the case where a measurement is carried out late or not at all. This may happen if less than N_cells arrive since the last measurement and the connection stops sending cells for a longer time. In that case, idle detection will set the connection to 'IDLE' after about the time given by Max_idle_loopᵢ*T_idle.

## Claims

1. A method for determining the status of a connection in a network comprising a plurality connections, the method comprising:-
assigning a predetermined time period to the connection; and
measuring the bandwidth of the connection during the predetermined time period;
characterised in that the method further comprises:-
inputting the measured bandwidth to an update function;
checking the value of the measured bandwidth against a predetermined value stored in the update function for the connection to determine the status thereof and adjusting the status accordingly;
resetting the predetermined time period for the connection; and
when the predetermined time period expires, setting the status of the connection to 'IDLE'.

2. A method according to claim 1, wherein the connection is set to 'IDLE' when measurements are lost.

3. A method according to claim 1 or 2, wherein the connections are put into different groups, each group having a timer which expires every time period T_idle.

4. A method according to claim 4, wherein the timer for different groups expire at different times.
